# EUROPEAN PATENT SPECIFICATION

(11) **EP 3 756 317 B1**
(45) Date of publication and mention of the grant of the patent: **13.12.2023**
(21) Application number: 19706502.2
(22) Date of filing: 15.02.2019
(51) Int. Cl.: H04L 45/52, H04L 45/00, H04L 45/02, H04L 45/24

(54) **METHOD, DEVICE AND COMPUTER PROGRAM PRODUCT FOR INTERFACING COMMUNICATION NETWORKS**
VERFAHREN, VORRICHTUNG UND COMPUTERPROGRAMMPRODUKT ZUR SCHNITTSTELLE VON KOMMUNIKATIONSNETZEN
PROCEDE, DISPOSITIF ET PRODUIT PROGRAMME INFORMATIQUE D'INTERFACE DE RESEAUX DE COMMUNICATION

(30) Priority: 20.02.2018 CH 2062018; 26.03.2018 CH 3972018; 26.03.2018 CH 3992018
(43) Date of publication of application: 30.12.2020
(73) Proprietor: Anapaya Systems AG, 8005 Zürich (CH)
(72) Inventor: HITZ, Samuel, 8005 Zürich (CH); SHIRLEY, Stephen, 8048 Zürich (CH); COSTEA, Sergiu, 8051 Zürich (CH)
(74) Representative: Grünecker Patent- und Rechtsanwälte PartG mbB
(86) International application number: PCT/EP2019/053864
(87) International publication number: WO 2019/162210

(56) References cited:
- US-A1- 2003 162 499
- US-A1- 2009 245 243
- US-B1- 7 151 775

## Description

### FIELD OF THE INVENTION

The invention pertains to the field of communication networks, in particular computer networks. In particular, it relates to a system and a method for interfacing packet switched networks with networks employing source-selected path routing.

### BACKGROUND OF THE INVENTION

Most Internet traffic today consists of Internet Protocol (IP) packets. To send IP traffic, a host first determines an IP address of a given destination, often using a service such as Domain Name Service (DNS). The host then includes the IP address in an IP header section of a data packet and sends the packet to a nearby router. At this point, the host no longer has any control over the path the data packet will take to reach its destination; i.e., the data packet travels through a sequence of routers, each of said routers deciding where to send the packet based on the destination IP address (and possibly other packet contents). Such principle of data packet transport is sometimes referred to as hop-by-hop transport or next-hop transport. Communication networks employing such transport principles are referred to as packet switched networks.

US 7 151 775 B1 relates to an apparatus and a method for forwarding data from a source to a destination over a network, which includes a subnetwork within the network, which in one embodiment is a label-switching subnetwork. Said label-switching subnetwork within the network includes an ingress node and an egress node coupled to source and destination nodes, respectively, on the network. The ingress node sends a signal along a route within the subnetwork through a plurality of subnetwork nodes to the egress node. In response, the subnetwork nodes transmit response signals back along the route toward the ingress node, which define the route through the subnetwork and simultaneously allocate a plurality of paths within the route.

US 2009/245243 A1 is directed to a method of sending a packet from a source node to a destination node in the same broadcasting domain, whereby the source node is connected with the destination node via a first and a second communication path. Subsequently, a criterion based on an attribute of the traffic flow is measured for each of the communication paths, and one path is selected between the first and second communication paths based on the measured criterion. Then, the selected communication path is assigned to the associated traffic flow and the packet is sent via the selected communication path.

### SUMMARY OF THE INVENTION

SCION, as described in the book "SCION: A Secure Internet Architecture", by A. Perrig et al., available at https://www.scion-architecture.net/pdf/SCION-book.pdf (and referred to as the SCION book in what follows; also available as eBook, ISBN 978-3-319-67080-5; and in printed form, ISBN 978-3-319-67079-9), is a next generation Internet architecture with a focus on security and resilience. As opposed to IP networks where only the destination address is needed for forwarding, SCION implements a model called source-selected path routing. In this model, each packet includes the full path - a sequence of router interfaces and Autonomous Systems (ASes) - it must traverse to reach its destination. To send a new packet, a host queries SCION infrastructure services and receives one or more paths. The host then chooses the path it prefers, embeds it in the packet and sends it to a SCION router. Routers then use the path to forward the packet, without needing any lookups.

SCION is fundamentally different from other source-directed route selection architectures, which generally require knowledge about the entire network topology in order to be able to route a data packet along a specific path. In SCION, possible routing paths along which data packets may be sent are initially explored by utilizing path-segment construction beacons (PCBs). During said process referred to as beaconing, PCBs accumulate cryptographically protected path information between autonomous systems (ASes) as they traverse the network. The collected information is chained together to create a data transmission path segment that traverses a sequence of ASes. The path resolution process of SCION creates an end-to-end forwarding path to a destination and consists of a path lookup, where the path segments are obtained and a path combination, where an actual forwarding path is created from the path segments.

As opposed to IP, SCION gives clients control over how traffic is forwarded. This allows clients to choose paths by taking into account security, network performance, and financial cost. Because multiple paths can be used at once, hosts can split traffic based on requirements (e.g., live conferencing traffic across a low-jitter and lower bandwidth path, while low-priority offline backups can be done via a high bandwidth but also high latency path). Hosts can also decide not to split traffic, and thus benefit from the added resilience of multiple paths; if one path becomes unavailable due to network conditions, traffic can still flow across remaining ones.

Due to protocol incompatibilities, existing IP-capable devices cannot directly communicate over SCION. Thus, they cannot leverage the path-control and resilience properties that SCION provides. However, it is possible to provide these advantages via tunneling devices called SIGs (SCION-IP Gateways as described briefly in paragraph 10.3 of the SCION book), which encapsulate IP packets in SCION packets. Because a SIG is SCION-capable, it handles path selection for encapsulated traffic (usually according to some forwarding policy) without requiring any changes to IP hosts or routers.

Hence, the SCION-IP gateway (SIG) service is responsible for providing interoperability between SCION and the legacy IP world. Every SCION AS that wants to enable legacy IP connectivity between its legacy hosts and those in other ASes deploys a SIG service. The service takes care of routing and encapsulation of legacy inter-AS traffic. All legacy traffic between SCION ASes is handled by the SIG service, with the sending side encapsulating the traffic, and the receiving side decapsulating it again back into regular IP packets.

All legacy traffic into or out of a SCION AS goes through the SIG service, by means of legacy IP routing rules. This means that the SIG service must be fast, in order to keep up with the traffic flow. It must also be robust, and able to deal with any packet loss in the encapsulated traffic.

Nevertheless, the question remains how these SIGs may ideally be employed and/or set up to allow for optimum tunneling performance, in particular without complicated tuning and/or user interaction.

It is thus an objective of the present invention to provide a method and a device for interfacing packet switched networks with networks employing source-selected path routing.

This objective and other objectives are solved by a method and a device for transmitting data from a first node to a second node of a source-selected path routing network in accordance with the independent patent claims.

Preferred embodiments are defined by the dependent claims.

### BRIEF DESCRIPTION OF THE DRAWINGS

The subject matter of the invention will be explained in more detail in the following text with reference to exemplary embodiments, which are illustrated in the attached drawings, of which:
Figure 1 illustrates a general overview of the system according to the present invention.
Figure 2 illustrates a general overview of the system according to the present invention.
Figure 3 illustrates a forwarding policy engine of a gateway device in accordance with the present invention.
Figure 4 illustrates a second exemplary embodiment of the method in accordance with the present invention.

### DETAILED DESCRIPTION

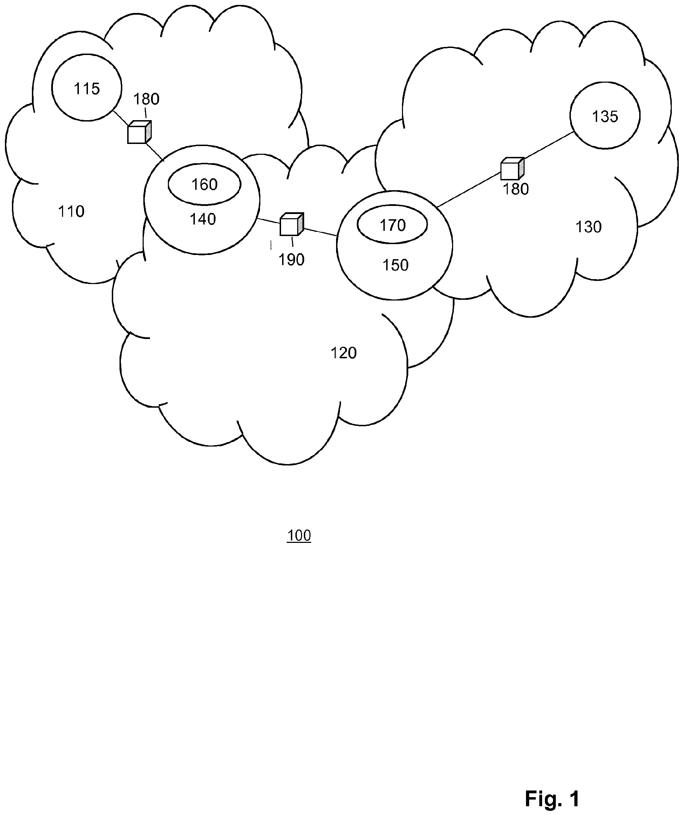

Figure 1 shows the general architecture of a system 100 according to the present invention. Said system comprises a first packet switched network, in particular a first subnet 110, a source-selected path network 120, which is preferably implemented as a SCION network, and a second packet switched network, in particular a second subnet 130. The first subnet 110 of a packet switched network contains a source node 115 and the second subnet 130 of a packet switched network contains a destination node 135. Further, the system 110 comprises a first node 140 and a second node 150.

The first node 140 and the second node 150 are common nodes, in particular edge nodes, of both the source-selected path network 120 and/or the packet switched network, in particular the first 110 and second subnet 130, respectively. Each of the first 140 and second node 150 may, alternatively be thought of as two directly connected edge (sub-)nodes: a first edge (sub-)node 140 of the source-selected path network 120 and a second edge (sub-)node 150 of the packet switched network, in particular the first 110 and second subnet 130, respectively.

The system 100 further comprises at least two gateway devices 160, 170, which are preferably implemented as SIG (SCION-IP Gateway) devices in the present invention. One of said gateway devices 160 is comprised in the first node 140, such that the first node 140 represents the first gateway device 160, while another of said gateway devices 170 is comprised in the second node 150, such that the second node 150 represents the second gateway device 170.

The first gateway device 160 is connectable to the first subnet 110 containing the source node 115 and to the source selected path network 120. Likewise, the second gateway device 170 may be connected to the source selected path network 120 and to the second subnet 130.

Hence, a gateway device, such as the first and second gateway devices 160, 170 may be a device that in general use a SCION network to connect multiple non-SCION networks. In operation, the first gateway device 160 achieve this by encapsulating IP packets, such as IP packet 180, in SCION packets, such as SCION packet 190 corresponding to IP packet 180, and then sending them to their destination via the SCION network 120. When receiving an IP packet 180 from the source node 115, the first node 140, in particular the entry gateway device 160, may look up the destination IP address in a local IP network prefix table and may determine a remote autonomous system (AS), in particular the remote AS containing the destination IP address. Afterwards, the entry gateway device 160 may choose a second gateway device 170, in particular a SIG, in the remote AS as the endpoint in the source-selected path network 120. The traffic may then be encapsulated and sent on the SCION network 120 along one or more paths, depending on a forwarding policy. Subsequently, said chosen second gateway device 170 may act as an exit gateway device, in particular as an exit SIG, at which the SCION packet 190 is again de-encapsulated into an IP packet 180 and then transmitted to the destination node 135 in the second subnet 130 of the packet switched network.

The gateway devices 160, 170 may in particular be a SIG, in particular a prior art SIG which has been modified through software, firmware or hardware.

The gateway devices 160, 170 may, in particular, comprise a processing unit which has been programmed by means of software or firmware, in particular loaded and/or stored in a memory associated with, in particular connected to, or comprised by said processing unit such that the processing unit may access data in said memory, to execute any of the methods as described above or below.

Gateway devices 160, 170 as described above may communicate with each other over the SCION network, using paths constructed by SCION services. Multipath communication is supported; if multiple paths exist between two gateway devices 160, 170 , they can be used simultaneously, e.g., to distribute different types or classes of traffic over paths with beneficial characteristics for that type or class of traffic.

Depending on network conditions, gateway devices may automatically add and remove paths to a destination without affecting existing traffic. Whenever multiple paths are available, gateway devices 160, 170 may use them to improve traffic resilience. If one path goes down - for example, due to the failure of a transit SCION router - a health monitor comprised by the gateway device 160 notices the event, and the gateway device 160 may remove the path so that traffic may immediately be redirected to remaining paths.

In general, certain paths are better suited to specific types or classes of traffic. Since gateway devices 160, 170 are both IP network and SCION network aware, they may examine traffic to determine its type or class and then send it on the path that fits best. This decision-making process is specified via a forwarding policy, which may e.g. be described by a network administrator in a configuration file or the gateway device. To implement the policy, gateway devices 160, 170 may include a classification engine, which assigns data packets 190 to classes. Data packets 190 in the same class may the temporarily or permanently be sent across the same set of paths, wherein some load-balancing strategy may be applied and use several different paths in an alternating scheme for a single type or class of traffic.

The gateway device forwarding policy may comprise traffic classifiers, which are used to assign a traffic class to data packets (190), path policies, which are used to choose the set of paths for a class, and/or path schedulers, which are used to implement traffic prioritization and shaping.

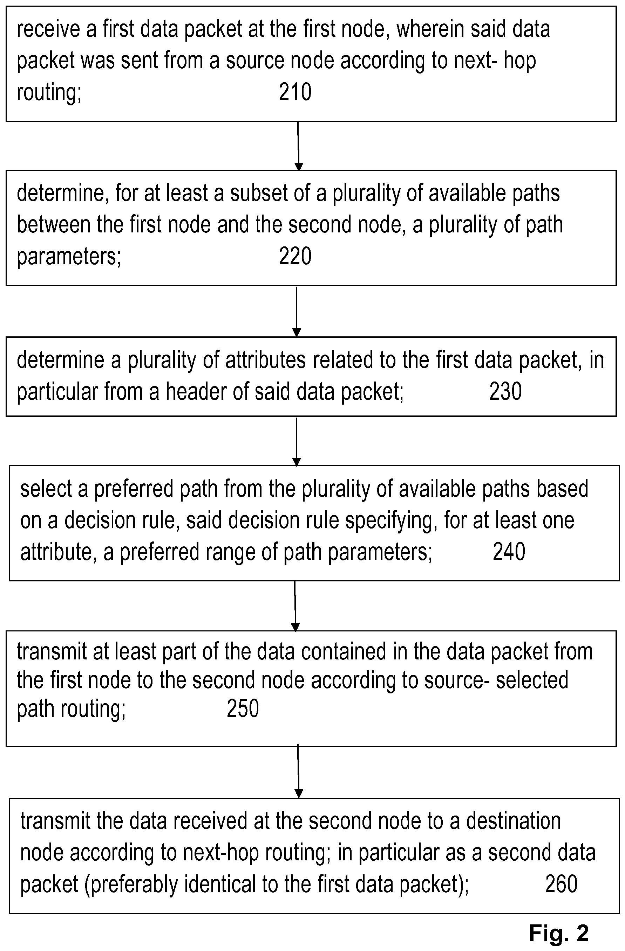

Figure 2 describes a computer-implemented method 200 for transmitting data from a first node 140 to a second node 150 of a source-selected path routing network 120 according to an embodiment of the present invention.

In a first step 210, the first node 140 may receive a data packet 180, in particular an IP packet 180 sent by a source node 115 in the packet switched network, in particular in the first subnet 110 of the packet switched network. The data packet 180 may, in particular, have been sent in accordance with the TCP/IP or UDP/IP protocol, but also in accordance with protocols as SCTP, L2TPv3, IPIP, ICMP, etc., or any other known layer-3 or layer-4 protocol.

To forward IP traffic, the first node 140, in particular the entry gateway device 160, maintains a network prefix table, in particular an IP network prefix table that contains known remote autonomous systems (ASes) and any IP networks within them. This information may either be configured statically, by a network administrator, or may be periodically retrieved by querying SCION services running in the remote AS. Whenever an IP packet 180 is received, the first node 140 uses the prefix table to determine the remote AS to which to send the encapsulated packet 190. This type of functionality is not limited to IP traffic, and the entry gateway device 160 may also include support for other addressing protocols (e.g., MPLS).

As the first 140 and second node 150 are connected through a plurality of paths, a preferred path needs to be selected from said plurality of paths for transmitting the data contained in the data packet 190 to the second node 150.

In order to perform said required selection, a plurality of path parameters representative of properties of the path, in particular data communication related properties of the path, may be determined for each path in step 220 of the computer-implemented method 200.

In a next step 230 of the method 200 according to an embodiment of the present invention, a plurality of attributes related to, in particular characterizing, the first data packet 190 may be determined, in particular from information contained and/or provided in a header of said data packet 190.

In particular, a traffic class of the first data packet 190 may be determined as an exemplary attribute. A traffic class may be thought of as a set of packets that match a predefined set of conditions. Such conditions usually refer to protocol fields, e.g. a specific destination port or a specific source IP address. Gateway devices 160, 170 assign a class to traffic by evaluating the conditions on each packet received from non-SCION networks; usually, this is IP traffic but support for other protocols may be added (such as MPLS). Depending on policy, Gateway devices 160, 170 may evaluate conditions across an entire network stack: network layer (IPv4, IPv6, etc.), transport layer (TCP, UDP, AH, ESP, etc.), and application layer via deep packet inspection (HTTP, DNS, etc.).

For deep packet inspection, support for specific applications may be added to gateway devices 160, 170 via modules. The modules may tell the gateway devices 160, 170 how to parse application messages and, in the case of more complex applications, may also include instructions on how to track state, in particular a network state or a state of a specific connection, in particular a traffic flow, in particular between two specific nodes. This allows the gateway devices 160, 170, such as SIGs, to implement advanced quality-of-service policies (e.g., assigning a low-jitter class to web conferencing traffic) even when lower-layer protocols do not include any relevant information.

Subsequently, in step 240 of the method 200, a preferred path is selected from the plurality of available paths. Said selection may be carried out based on a decision rule, which decision rule may, in particular, specify, for at least one attribute, a preferred range of path parameters.

For each traffic class and each destination AS, the entry gateway 160 may select a set of paths out of a pool of all known paths. The decision rule may be based on a configured path policy, which may dictate parameters that a selected path should or must have. For example, a voice traffic class might prefer paths with low latency. To choose paths efficiently, the entry gateway 160 has access to multiple path parameters. When discovering a new path, the entry gateway 160 may receive information about a maximum allowed packet size (Maximum Transmission Unit, or MTU) for said new path. Information about bandwidth might also be available.

Additionally, the first node 140, in particular the entry gateway device 160, may permanently, in particular at least essentially constantly monitor path health, e.g. by passively gathering statistics about traffic and/or by actively exchanging health check packets. Thus, the first node 140 may calculate parameters such as loss, latency, and jitter for each path. Other useful properties are not strictly related to networking; these may include geographical location of transit ASes, ownership of transit ASes, or financial costs of using a path (e.g., if transit ASes monetize forwarding).

Returning to Figure 2, once a preferred path has been selected from the plurality of available paths based on the decision rule, in step 250, at least part of the data contained in the data packet 180, preferably however the whole data packet 180 as received by the first node 140, may then be transmitted, in particular sent, to the second node 150 according to source-selected path routing, as, in particular, provided for by a SCION network 120.

Finally, in step 260 of the method 200 according to an embodiment of the present invention, the data packet 190, which is received at the second node 150, is de-encapsulated by the exit gateway device 170 and transmitted to the destination node 135 as a second IP-data packet according to next-hop routing. Preferably, said second IP data packet is identical to the first IP data packet 180.

In a further aspect of the present invention, the first node 140, in particular the entry gateway 160, may implement advanced quality-of-service mechanisms in the form of traffic prioritization and shaping, after a set of paths is selected.

The first node 140 may shape traffic on a path by only allowing a preset amount of traffic, in particular traffic in a given class, to be forwarded over a period of time. Traffic that exceeds the threshold may be dropped.

If the same path (or paths) is selected for multiple traffic classes and a bandwidth of the path is insufficient, the first node 140 can prioritize traffic based on said traffic's class. Packets from classes that are deemed prioritary are put on the path before others. If full path capacity is reached, packets are dropped. Prioritization policies can also configure caps (absolute limits or limits relative to available bandwidth) on how much traffic from a class can be sent across a path, or if a particular class can send above its allocation (also known as burst) if bandwidth is available, i.e. if the first node may send traffic and or packets belonging to said class at transmission rates that will lead to an allocated bandwidth for said particular class to be exceeded.

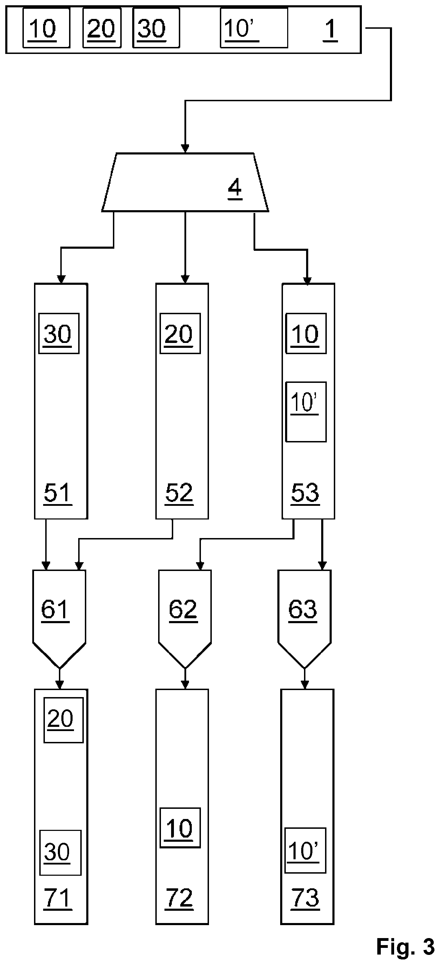

Figure 3 illustrates a forwarding policy engine 300 of a gateway device 160 in accordance with the present invention. IP data packets 10, 10', 20 and 30, originating from one or more source nodes 115 of an IP network 110, arrive at a first node 140, in particular an entry gateway device 160, through an input packet queue 1 of said first node 140.

A traffic classifier 4 comprised by the gateway device 160 inspects IP data packages 10, 10', 20 and 30 and classifies them into three different and disjoint classes based on, in particular, content of the IP data packets 10, 10', 20 and 30.

As exemplary illustrated in Figure 3, IP data packets 10, 10' may contain voice data and may thus accordingly be classified into voice data class 53. IP packet 20 may contain backup data and may thus accordingly be classified into backup data class 52. IP packet 30 may contain strictly confidential data and may thus accordingly be classified into strictly confidential data class 51.

The forwarding policy engine 300 selects appropriate paths for the various data classes 51, 52, 53. First path 71 fulfils the requirements of both backup data class 52 and of strictly confidential data class 51, but not those of voice data class 53. Second path 72 and third path 73 fulfil the requirements for voice data, but not the requirements for backup or strictly confidential data.

The forwarding policy engine 300 may thus decide to send IP data packets 20, 30 belonging to backup data class 52 and of strictly confidential data class 51 along first path 71, and IP data packets belonging to voice data class 53 along second path 72 or third path 73. Schedulers 61, 62, and 63 subsequently distribute the various IP data packets 20, 30, 10 and 10' according to the decision of the forwarding policy engine 300. In the example shown in Figure 3, the forwarding policy engine 300 decided to send IP data packets 10, 10' in parallel on second path 72 and third path 73, e.g. in order to limit bandwidth consumption on the individual paths.

While performing the method 200 of the present invention described above, the first node 140 may constantly collect information about the paths being used to determine if a path is up (i.e., may be used to send traffic) and to compute some of the parameters that can be used in path policies by the forwarding policy engine 300 described with reference to Figure 3.

While some of this information may be derived from passive traffic - for example, counting the number of dropped frames when the first node 140 is receiving traffic - the first node 140 may also take an active role in measuring some parameters. Periodic probes may be sent out across each path; if a probe is unanswered by a remote receiving node 150, in particular gateway device 170, a failure is recorded. If multiple consecutive probes are lost, the path is marked as down and the first node 140 may attempt to switch encapsulated traffic to a different path.

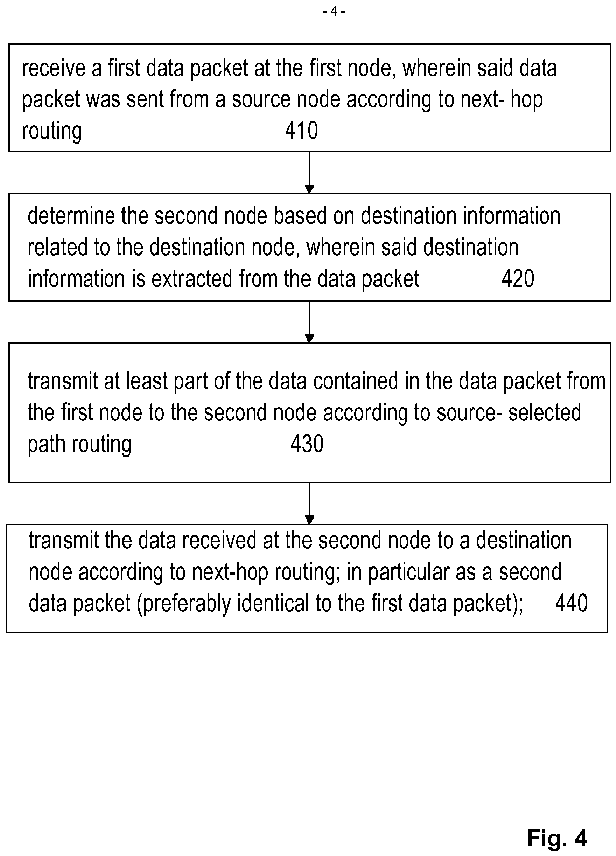

Figure 4 describes a further computer-implemented method 400 for transmitting data from a first node 140 to a second node 150 of a source-selected path routing network 120 according to an embodiment of the present invention.

In a first step 410, the first node 140 may receive a first data packet 180, in particular an IP packet 180 sent by a source node 115 in the packet switched network, in particular in the first subnet 110 of the packet switched network, according to next-hop routing.

To send traffic to a remote AS, the first node 140, in particular the entry gateway 160, must discover a remote node of the source-selected path routing network 120 capable of recovering the first data packet 190, and of transmitting said first data packet 190 to the destination node 135. The remote node, which is to serve as second node 150 for at least the first data packet 190, may, in particular, be a SIG which may act as exit gateway device. Similarly to a network prefix table, a list of such remote nodes, in particular SIGs, may either be configured statically, or may be requested from the remote AS. The first node 140 may send the requests, e.g. on startup, if the destination AS, in particular the remote node containing the destination node 135, is included in a configuration file, or on-demand, whenever it needs to send traffic to a remote AS for which it does not know any appropriate remote node. Second nodes 150 discovered on-demand may be deleted if no longer needed (i.e., if no traffic was sent to the remote AS for a preset amount of time); if traffic for the remote AS arrives again, a request is resent so that an appropriate remote node may again be discovered.

Hence, in a next step 420 of the method 400, the second node 150 is determined based on destination information related to the destination node 135. Hereby said destination information is extracted from the data packet 190, which is to be transmitted to the destination node 135.

Alternatively, the remote AS may construct a list of gateway devices 170, in particular SIGs, based on its own traffic policies. For example, if the remote AS sees a request coming from an AS in a specific geographic region, e.g. Asia, it might be interested to include only a gateway device 170 that is close to said geographic region in its answer, thus decreasing round-trip times for encapsulated traffic. The remote AS may also distribute inbound traffic load across multiple gateway devices 170 by repeatedly changing, in particular alternating the list of gateway devices 170 in its answers. More complex traffic policies could respond with high-availability, high-performance gateway devices 170 to selected queries, e.g. from specific remote AS customers. Other factors that are taken into account when creating this list are current load and availability of a gateway device 170. An available gateway device 170 is preferred compared to a non-available one, even if it has a smaller load. Further, also the identity of the source AS is taken into consideration for creating the list, since gateway devices 170 may be exclusive for a set of source ASes, e.g. to implement a Service Level Agreement (SLA) or since a set of said gateway devices 170 may handle public traffic and a different set of said gateway devices 170 may handle traffic from intra-organizational or partner source ASes. If the remote AS responds with a list of gateway devices 170 containing multiple acceptable gateway devices 170, the first node 140 may choose any of them.

The first node 140 may send out probes to determine whether a specific remote gateway device 170 is operational. If a problem with said specific remote gateway device 170 is detected, the first node 140 may choose a new remote gateway device 170 if one is available or issue a new query to the remote AS to obtain the list of available gateway devices 170. If still none are available, based on local policy, the first node 140 may choose to forward traffic to the last known working remote gateway device 170 or drop the traffic.

If the remote gateway device 170 is statically configured or its parent AS is predefined in the configuration file, the probes may be sent out indefinitely. If the AS and remote gateway device 170 were discovered on demand, the probes may only be sent out as long as there is still traffic sent out to the remote AS.

Returning to Figure 4, when a second node 150 has been determined, at least part of the data contained in the data packet 190 is transmitted from the first node 140 to the second node 150 according to source-selected path routing in the source-selected path network 120 in method step 430.

Finally, in step 440 of the method 400, the data packet 190, which is received at the second node 150, is de-encapsulated by the exit gateway device 170 and transmitted to the destination node 135 as a second IP-data packet according to next-hop routing. Preferably, said second IP data packet is identical to the first IP data packet 180.

Hence, from the description of Figure 4, it is obvious that the step of determining the second node based on destination information related to the destination node may also be performed independently from performing the steps of determining, for at least a subset of a plurality of available paths between the first node and the second node, a plurality of path parameters, determining a plurality of attributes related to the first data packet, and selecting a preferred path from the plurality of available paths based on a decision rule, said decision rule specifying, for at least one attribute, a preferred range of path parameters.

From the forgoing and further it will be appreciated that, although specific embodiments have been described herein for purposes of illustration, various modifications may be made without deviating from the scope of the present disclosure. The scope of the present invention is limited by the appended claims.

## Claims

1. A method for transmitting data from a first node (140) to a second node (150) of a source-selected path routing network (120), comprising the steps of:
a) receiving (410) a first data packet (180) at the first node (140), wherein said data packet (180) was sent from a source node (115) according to next-hop routing;
b) transmitting (430) at least part of the data contained in the data packet (180) from the first node (140) to the second node (150) according to source-selected path routing;
c) transmitting (440) the data received at the second node (150) to a destination node (135) according to next-hop routing; further comprising
d) determining (420), by a gateway device (160) comprised in the first node (140), the second node (150) based on destination information related to the destination node (135) and based on a load and/or a reachability and a geographic location of the second node (150);
e) determining (220), by the gateway device (160), for at least a subset of a plurality of available paths between the first node (140) and the second node (150), a plurality of path parameters;
f) determining (230), by the gateway device (160), a plurality of attributes related to the first data packet (180);
g) selecting (240), by the gateway device (160), a preferred path from the plurality of available paths based on a decision rule, said decision rule specifying, for at least one attribute, a preferred range of path parameters,
wherein the first node (140) and the source node (115) belong to a first subnet (110) of a packet switched network or to a first packet switched network and wherein the second node (150) and the destination node (135) belong to a second subnet (130) of the packet switched network or to a second packet switched network and wherein the first subnet (110) is different from the second subnet (130), and/or the first packet switched network is different from the second packet switched network.

2. The method of claim 1, wherein the first node (140) constitutes an entry gateway between a first subnet (110) of a packet switched network or a first packet switched network and the source-selected path routing network (120) and wherein the second node (150) constitutes an exit gateway between the source-selected path routing network (120) and a second subnet (130) of the packet switched network or a second packet switched network.

3. The method of any of claims 1 or 2, wherein the plurality of attributes related to the first data packet (180) is determined from a header of said first data packet (180) using deep inspection.

4. The method of any of claims 1 to 3, wherein the plurality of attributes related to the first data packet (180) comprises a traffic class and/or a source and/or destination application, and/or
wherein the traffic class comprises audio or video data.

5. The method of any of claims 1 to 4, wherein determining (220) the plurality of path parameters comprises measurements of network properties for at least a subset of the plurality of available paths,
the network properties comprising latency, bandwidth, throughput, jitter, packet loss and/or maximum transmission unit.

6. The method of any of claims 1 to 5, wherein step g) according to claim 1 comprises:
a) determining, for at least a subset of the plurality of available paths, a quantity representative of a deviation between path parameters and the preferred range of path parameters;
b) selecting the preferred path based on said quantities, in particular by minimizing a sum of said quantities.

7. The method of any of claims 1 to 6, wherein in step g) according to claim 1, pre-determined and/or user-selectable rules based on traffic class, preferred network paths, geographic constraints such as geo-fencing and geo-avoidance, financial cost, network measurements, source and destination application, and traffic shaping rules are taken into account.

8. The method of any of claims 1 to 7, wherein the destination information related to the destination node (135) is extracted from the data packet (180); and/or
wherein the second node (150) is determined by selecting a gateway node that belongs to the second subnet (130) of the packet switched network or to the second packet switched network; and/or
wherein the second node (150) is determined by selecting a preferred gateway node from a plurality of gateway nodes, wherein each of the plurality of said gateway nodes belong to the second subnet (130) of the packet switched network or the second packet switched network; and/or
wherein the preferred gateway node is selected based on at least one of a plurality of parameters related to said gateway node,
wherein said parameters include slices of networks, load on individual destination devices, reachability, measurements of other network properties, sender network and geographical location.

9. The method of claim 8, further comprising the steps of
a) sending a discovery packet by the first node (140) to the second subnet (130), in particular to an autonomous system comprising said second subnet (130);
b) receiving a list of further gateway nodes from the second subnet, in particular from the autonomous system comprising said second subnet;
c) selecting the preferred gateway node by selecting one of the further gateway nodes from the list, and/or
wherein for each of the further gateway nodes, the list comprises information related to a state of the gateway node and/or
wherein the list comprises information related to an instantaneous state of the gateway node, wherein said instantaneous state is **characterized by** a load of the node and/or a reachability of the node.

10. A gateway device (160, 170) comprised in a first network node (140), the gateway device connected to
a) a first packet switched network, in particular a first subnet (110) of a packet switched network, said first packet switched network containing a source node (115), and to
b) a source selected path routing network (120) at the first node (140), said gateway device (160, 170) configured to determine (420) a second node (150) based on destination information related to a destination node (135) and based on a load and/or a reachability and a geographic location of the second node (150), said second node (150) connected to
i) the first node (140) through the source selected path routing network (120) and
ii) a second packet switched network, in particular a second subnet (130) of the packet switched network, said second packet switched network containing the destination node (135),
wherein the first subnet (110) is different from the second subnet (130), and/or the first packet switched network is different from the second packet switched network and wherein said gateway device (160, 170) is further comprised in the second node (150), and to transmit the data packet (180) to the destination node (135) according to the method of any of claims 1 to 9.

11. The gateway device (160, 170) of claim 10, further configured to
a) receive a stream of data through the source selected path routing network (120), preferably from the second node (150);
b) extract data packets for packet switched routing encapsulated in the stream of data;
c) if said data packets are designated for a recipient node, preferably the source node (115), in the first subnet (110):
d) transmit said data packets to said recipient node.

12. The gateway device (160, 170) of any of claims 10 or 11, wherein said gateway device (160, 170) is comprised in each of a plurality of gateway nodes.

13. A computer program product, in particular a computer-readable storage medium, comprising instructions to cause a gateway device (160, 170) comprised in a first network node (140) to carry out the method of any of claims 1 to 9.

## Patentansprüche

1. Verfahren zum Übertragen von Daten von einem ersten Knoten (140) zu einem zweiten Knoten (150) eines Netzes (120) mit quellengewähltem Pfad-Routing (source-selected path routing network), das die folgenden Schritte umfasst:
a) Empfangen (410) eines ersten Datenpaketes (180) an dem ersten Knoten (140), wobei das Datenpaket (180) von einem Quellen-Knoten (115) gemäß Next-Hop-Routing gesendet wurde;
b) Senden (430) wenigstens eines Teils der in dem Datenpaket (180) enthaltenen Daten von dem ersten Knoten (140) zu dem zweiten Knoten (150) gemäß quellengewähltem Pfad-Routing;
c) Senden (440) der an dem zweiten Knoten (150) empfangenen Daten zu einem Ziel-Knoten (135) gemäß Next-Hop-Routing; wobei es des Weiteren umfasst:
d) Bestimmen (420) des zweiten Knotens (150) auf Basis von Ziel-Informationen, die sich auf den Ziel-Knoten (135) beziehen, sowie auf Basis einer Last und/oder einer Erreichbarkeit sowie eines geografischen Standortes des zweiten Knotens (150) durch eine in dem ersten Knoten (140) enthaltene Gateway-Vorrichtung (160);
e) Bestimmen (220) einer Vielzahl von Pfad-Parametern für wenigstens eine Teilgruppe einer Vielzahl verfügbarer Pfade zwischen dem ersten Knoten (140) und dem zweiten Knoten (150), durch die Gateway-Vorrichtung(160);
f) Bestimmen (230) einer Vielzahl von Attributen, die sich auf das erste Datenpaket (180) beziehen, durch die Gateway-Vorrichtung (160);
g) Auswählen (240) eines bevorzugten Pfades aus der Vielzahl verfügbarer Pfade durch die Gateway-Vorrichtung (160) auf Basis einer Entscheidungsregel, wobei die Entscheidungsregel für wenigstens ein Attribut einen bevorzugten Bereich von Pfad-Parametern angibt,
wobei der erste Knoten (140) sowie der Quellen-Knoten (115) zu einem ersten Teilnetz (110) eines paketvermittelten Netzes oder zu einem ersten paketvermittelten Netz gehören, der zweite Knoten (150) sowie der Ziel-Knoten (135) zu einem zweiten Teilnetz (130) des paketvermittelten Netzes oder zu einem zweiten paketvermittelten Netz gehören und sich das erste Teilnetz (110) von dem zweiten Teilnetz (130) unterscheidet und/oder das erste paketvermittelte Netz sich von dem zweiten paketvermittelten Netz unterscheidet.

2. Verfahren nach Anspruch 1, wobei der erste Knoten (140) ein Eingangs-Gateway zwischen einem ersten Teilnetz (110) eines paketvermittelten Netzes oder eines ersten paketvermittelten Netzes und dem Netz (120) mit quellengewähltem Pfad-Routing bildet und der zweite Knoten (150) ein Ausgangs-Gateway zwischen dem Netz (120) mit quellengewähltem Pfad-Routing und einem zweiten Teilnetz (130) des paketvermittelten Netzes oder eines zweiten paketvermittelten Netzes bildet.

3. Verfahren nach einem der Ansprüche 1 oder 2, wobei die Vielzahl von Attributen, die sich auf das erste Datenpaket (180) beziehen, anhand eines Headers des ersten Datenpaketes (180) unter Verwendung von Deep Inspection bestimmt wird.

4. Verfahren nach einem der Ansprüche 1 bis 3, wobei die Vielzahl von Attributen, die sich auf das erste Datenpaket (180) beziehen, eine Dienstgüteklasse und/oder eine Quellen- und/oder Ziel-Anwendung umfasst, und/oder
wobei die Dienstgüteklasse Audio- oder Videodaten umfasst.

5. Verfahren nach einem der Ansprüche 1 bis 4, wobei Bestimmen (220) der Vielzahl von Pfad-Parametern Messungen von Netzeigenschaften für wenigstens eine Teilgruppe der Vielzahl verfügbarer Pfade umfasst,
und die Netzeigenschaften Latenz, Bandbreite, Durchsatz, Jitter, Paketverlust und/oder maximale Übertragungseinheit umfassen.

6. Verfahren nach einem der Ansprüche 1 bis 5, wobei Schritt g) gemäß Anspruch 1 umfasst:
a) Bestimmen einer Größe, die repräsentativ für eine Abweichung zwischen Pfad-Parametern und dem bevorzugten Bereich von Pfad-Parametern ist, für wenigstens eine Teilgruppe der Vielzahl verfügbarer Pfade;
b) Auswählen des bevorzugten Pfades auf Basis der Größen, insbesondere durch Minimieren einer Summe der Größen.

7. Verfahren nach einem der Ansprüche 1 bis 6, wobei in Schritt g) gemäß Anspruch 1 vorgegebene und/oder durch einen Benutzer auswählbare Regeln auf Basis von Dienstgüteklasse, bevorzugten Netz-Pfaden, geografischen Einschränkungen wie Geo-Fencing und Geo-Avoidance, finanziellem Aufwand, Netz-Messungen, Quellen- und Zielanwendung sowie Verkehrsformungs-Regeln berücksichtigt werden.

8. Verfahren nach einem der Ansprüche 1 bis 7, wobei die Ziel-Informationen, die sich auf den Ziel-Knoten (135) beziehen, aus dem Datenpaket (180) extrahiert werden; und/oder der zweite Knoten (150) durch Auswählen eines Gateway-Knotens bestimmt wird, der zu dem zweiten Teilnetz (130) des paketvermittelten Netzes oder zu dem zweiten paketvermittelten Netz gehört; und/oder
der zweite Knoten (150) durch Auswählen eines bevorzugten Gateway-Knotens aus einer Vielzahl von Gateway-Knoten bestimmt wird, wobei jeder der Vielzahl der Gateway-Knoten zu dem zweiten Teilnetz (130) des paketvermittelten Netzes oder dem zweiten paketvermittelten Netz gehört; und/oder
wobei der bevorzugte Gateway-Knoten auf Basis wenigstens eines einer Vielzahl von Parametern ausgewählt wird, die sich auf den Gateway-Knoten beziehen,
wobei die Parameter Netzabschnitte (slices of networks), Last an einzelnen Ziel-Vorrichtungen, Erreichbarkeit, Messungen anderer Netzeigenschaften, Absender-Netz und geografischen Standort einschließen.

9. Verfahren nach Anspruch 8, das des Weiteren die folgenden Schritte umfasst
a) Senden eines Discovery-Paketes durch den ersten Knoten (140) zu dem zweiten Teilnetz (130), insbesondere zu einem autonomen System, das das zweite Teilnetz (130) umfasst;
b) Empfangen einer Liste weiterer Gateway-Knoten von dem zweiten Teilnetz, insbesondere von dem autonomen System, das das zweite Teilnetz umfasst;
c) Auswählen des bevorzugten Gateway-Knotens durch Auswählen eines der weiteren Gateway-Knoten aus der Liste, und/oder
wobei die Liste für jeden der weiteren Gateway-Knoten Informationen umfasst, die sich auf einen Zustand des Gateway-Knotens beziehen, und/oder
wobei die Liste Informationen umfasst, die sich auf einen aktuellen Zustand des Gateway-Knotens beziehen, wobei der aktuelle Zustand durch eine Last des Knotens und/oder eine Erreichbarkeit des Knotens gekennzeichnet ist.

10. Gateway-Vorrichtung (160, 170), die in einem ersten Netzknoten (140) enthalten ist, wobei die Gateway-Vorrichtung verbunden ist mit:
a) einem ersten paketvermittelten Netz, insbesondere einem ersten Teilnetz (110) eines paketvermittelten Netzes, wobei das erste paketvermittelte Netz einen Quellen-Knoten (115) enthält, sowie
b) einem Netz (120) mit quellengewähltem Pfad-Routing an dem ersten Knoten (140), wobei die Gateway-Vorrichtung (160, 170) so ausgeführt ist zum:
Bestimmen (420) eines zweiten Knotens (150) auf Basis von Ziel-Informationen, die sich auf einen Ziel-Knoten (135) beziehen, sowie auf Basis einer Last und/oder einer Erreichbarkeit sowie eines geografischen Standortes des zweiten Knotens (150), wobei der zweite Knoten (150) verbunden ist mit:
i) dem ersten Knoten (140) über das Netz (120) mit quellengewähltem Pfad-Routing und
ii) dem zweiten paketvermittelten Netz, insbesondere einem zweiten Teilnetz (130) des paketvermittelten Netzes, wobei das zweite paketvermittelte Netz den Ziel-Knoten (135) enthält,
wobei sich das erste Teilnetz (110) von dem zweiten Teilnetz (130) unterscheidet und/oder das erste paketvermittelte Netz sich von dem zweiten paketvermittelten Netz unterscheidet, und
wobei die Gateway-Vorrichtung (160, 170) des Weiteren in dem zweiten Netz (150) enthalten ist,
sowie zum Senden des Datenpaketes (180) zu dem Ziel-Knoten (135) gemäß dem Verfahren nach einem der Ansprüche 1 bis 9.

11. Gateway-Vorrichtung (160, 170) nach Anspruch 10, die des Weiteren ausgeführt ist zum:
a) Empfangen eines Stroms von Daten über das Netz (120) mit quellengewähltem Pfad-Routing, vorzugsweise von dem zweiten Knoten (150);
b) Extrahieren von Datenpaketen für paketvermitteltes Routing, die in den Datenstrom eingekapselt sind;
c) wenn die Datenpakete für einen Empfänger-Knoten, vorzugsweise den Quellen-Knoten (115), in dem ersten Teilnetz (110) bestimmt sind,
d) Senden der Datenpakete zu dem Empfänger-Knoten.

12. Gateway-Vorrichtung (160, 170) nach einem der Ansprüche 10 oder 11, wobei die Gateway-Vorrichtung(160, 170) in jedem einer Vielzahl von Gateway-Knoten enthalten ist.

13. Computerprogramm-Erzeugnis, insbesondere ein computerlesbares Speichermedium, das Anweisungen umfasst, die eine Gateway-Vorrichtung (160, 170), die in einem ersten Netz-Knoten (140) enthalten ist, veranlasst, das Verfahren nach einem der Ansprüche 1 bis 9 auszuführen.

## Revendications

1. Procédé de transmission de données d'un premier noeud (140) à un second noeud (150) d'un réseau de routage (120) à chemin sélectionné par la source, comprenant les étapes suivantes :
a) réception (410) d'un premier paquet de données (180) au premier noeud (140), ledit paquet de données (180) ayant été envoyé à partir d'un noeud source (115) conformément au routage par saut suivant ;
b) transmission (430) d'au moins une partie des données contenues dans le paquet de données (180) du premier noeud (140) au second noeud (150) conformément au routage par chemin sélectionné par la source ;
c) transmission (440) des données reçues au second noeud (150) à un noeud de destination (135) en fonction du routage par saut suivant ;
comprenant en outre les opérations suivantes :
d) détermination (420), par un dispositif passerelle (160) compris dans le premier noeud (140), le second noeud (150) sur la base des informations de destination relatives au noeud de destination (135) et sur la base d'une charge et/ou d'une accessibilité et d'un emplacement géographique du second noeud (150) ;
e) détermination (220), par la passerelle (160), pour au moins un sous-ensemble d'une pluralité de chemins disponibles entre le premier noeud (140) et le second noeud (150), d'une pluralité de paramètres de chemin ;
f) détermination (230), par le dispositif de passerelle (160), d'une pluralité d'attributs liés au premier paquet de données (180) ;
g) sélection (240), par la passerelle (160), d'un chemin préféré parmi la pluralité de chemins disponibles sur la base d'une règle de décision, ladite règle de décision spécifiant, pour au moins un attribut, une plage préférée de paramètres de chemin,
dans lequel le premier noeud (140) et le noeud source (115) appartiennent à un premier sous-réseau (110) d'un réseau à commutation par paquets ou à un premier réseau à commutation par paquets et dans lequel le second noeud (150) et le noeud de destination (135) appartiennent à un second sous-réseau (130) du réseau à commutation par paquets ou à un second réseau à commutation par paquets et dans lequel le premier sous-réseau (110) est différent du second sous-réseau (130), et/ou le premier réseau à commutation par paquets est diffé-rent du second réseau à commutation par paquets.

2. Procédé selon la revendication 1, dans lequel le premier noeud (140) constitue une passerelle d'entrée entre un premier sous-réseau (110) d'un réseau à commutation par paquets ou un premier réseau à commutation par paquets et le réseau de routage du chemin sélectionné par la source (120) et dans lequel le second (150) constitue une passerelle de sortie entre le réseau de routage du chemin sélectionné par la source (120) et un second sous-réseau (130) du réseau à commutation par paquets ou un second réseau à commutation par paquets.

3. Procédé selon l'une des revendications 1 ou 2, dans lequel la pluralité d'attributs liés au premier paquet de données (180) est déterminée à partir d'un en-tête dudit premier paquet de données (180) à l'aide d'une inspection approfondie.

4. Procédé selon l'une des revendications 1 à 3, dans lequel la pluralité d'attributs liés au premier paquet de données (180) comprend une classe de trafic et/ou une application source et/ou destination, et/ou
la classe de trafic comprend des données audio ou vidéo.

5. Procédé selon l'une des revendications 1 à 4, dans lequel la détermination (220) de la pluralité de paramètres de chemin comprend des mesures des propriétés du réseau pour au moins un sous-ensemble de la pluralité de chemins disponibles, les propriétés du réseau comprenant la latence, la largeur de bande, le débit, la gigue, la perte de paquets et/ou l'unité de transmission maximale.

6. Procédé selon l'une des revendications 1 à 5, dans lequel l'étape g) selon la revendication 1 comprend les opérations suivantes :
a) déterminer, pour au moins un sous-ensemble de la pluralité de chemins disponibles, une quantité représentative d'un écart entre les paramètres du chemin et la plage préférée de paramètres du chemin ;
b) sélectionner le chemin préféré sur la base de ces quantités, en particulier en minimisant la somme de ces quantités.

7. Procédé selon l'une des revendications 1 à 6, dans lequel l'étape g) de la revendication 1 prend en compte des règles prédéterminées et/ou sélectionnables par l'utilisateur, fondées sur la classe de trafic, les chemins de réseau préférés, les contraintes géographiques telles que la géo-clôture et la géo-évitement, le coût financier, les mesures de réseau, l'application source et destination, et les règles de mise en forme du trafic.

8. Procédé selon l'une des revendications 1 à 7, dans lequel les informations de destination relatives au noeud de destination (135) sont extraites du paquet de données (180) ; et/ou
dans lequel le second noeud (150) est déterminé par la sélection d'un noeud de passerelle appartenant au second sous-réseau (130) du réseau à commutation par paquets ou au second réseau à commutation par paquets ; et/ou le second noeud (150) est déterminé par la sélection d'un noeud de passerelle préféré parmi plusieurs noeuds de passerelle, chacun de ces noeuds de passerelle appartenant au second sous-réseau (130) du réseau à commutation par paquets ou au second réseau à commutation par paquets ; et/ou le noeud de passerelle préféré est sélectionné sur la base d'au moins un des nombreux paramètres liés à ce noeud de passerelle,
dans lequel lesdits paramètres comprennent les tranches de réseaux, la charge sur les appareils de destination individuels, la joignabilité, les mesures d'autres propriétés du réseau, le réseau de l'expéditeur et l'emplacement géographique.

9. Procédé selon la revendication 8, comprenant en outre les étapes suivantes
a) envoyer un paquet de découverte par le premier noeud (140) au second sous-réseau (130), en particulier à un système autonome comprenant ledit second sous-réseau (130) ;
b) recevoir une liste d'autres noeuds de passerelle du second sous-réseau, en particulier du système autonome comprenant ledit second sous-réseau ;
c) sélectionner le noeud de passerelle préféré en choisissant l'un des autres noeuds de passerelle de la liste, et/ou
dans lequel, pour chacun des autres noeuds de passerelle, la liste comprend des informations relatives à l'état du noeud de passerelle, et/ou
la liste comprend des informations relatives à un état instantané du noeud de la passerelle, cet état instantané étant **caractérisé par** une charge du noeud et/ou une accessibilité du noeud.

10. Dispositif de passerelle (160, 170) compris dans un premier noeud de réseau (140), le dispositif de passerelle étant connecté à
a) un premier réseau à commutation par paquets, en particulier un premier sous-réseau (110) d'un réseau à commutation par paquets, ledit premier réseau à commutation par paquets contenant un noeud source (115), et pour
b) un réseau de routage du chemin sélectionné par la source (120) au niveau du premier noeud (140),
ledit dispositif de passerelle (160, 170) configuré pour déterminer (420) un second noeud (150) sur la base d'informations de destination liées à un noeud de destination (135) et sur la base d'une charge et/ou d'une accessibilité et d'un emplacement géographique du second noeud (150), ledit second noeud (150) étant connecté
i) au premier noeud (140) par l'intermédiaire du réseau de routage du chemin sélectionné par la source (120) et
ii) à un second réseau à commutation par paquets, en particulier un second sous-réseau (130) du réseau à commutation par paquets, ledit second réseau à commutation par paquets contenant le noeud de destination (135),
dans lequel le premier sous-réseau (110) est différent du second sous-réseau (130), et/ou le premier réseau à commutation par paquets est différent du second réseau à commutation par paquets et dans lequel ledit dispositif de passerelle (160, 170) est également compris dans le second noeud (150),
et transmettre le paquet de données (180) au noeud de destination (135) conformément au procédé selon l'une des revendications 1 à 9.

11. Dispositif de passerelle (160, 170) selon la revendication 10, configuré en outre pour
a) recevoir un flux de données par l'intermédiaire du réseau de routage du chemin sélectionné par la source (120), de préférence à partir du second noeud (150) ;
b) extraire des paquets de données pour le routage par commutation par paquets encapsulés dans le flux de données ;
c) si ces paquets de données sont destinés à un noeud destinataire, de préférence le noeud source (115), dans le premier sous-réseau (110) :
d) transmettre lesdits paquets de données au noeud destinataire.

12. Dispositif de passerelle (160, 170) selon l'une des revendications 10 ou 11, dans lequel ledit dispositif de passerelle (160, 170) est compris dans chacun d'une pluralité de noeuds de passerelle.

13. Produit de programme informatique, en particulier un support de stockage lisible par ordinateur, comprenant des instructions pour amener un dispositif de passerelle (160, 170) compris dans un premier noeud de réseau (140) pour exécuter le procédé selon l'une des revendications 1 à 9.
